# EUROPÄISCHE PATENTSCHRIFT

(11) **EP 3 848 266 B1**
(45) Veröffentlichungstag und Bekanntmachung des Hinweises auf die Patenterteilung: **27.08.2025**
(21) Anmeldenummer: 20213459.9
(22) Anmeldetag: 11.12.2020
(51) Int. Cl.: B60W 60/00

(54) **VERFAHREN ZUM ERSTELLEN EINER PROBABILISTISCHEN FREIRAUMKARTE MIT STATISCHEN UND DYNAMISCHEN OBJEKTEN**
METHOD FOR CREATING A PROBABILISTIC FREE SPACE MAP WITH STATIC AND DYNAMIC OBJECTS
PROCÉDÉ DE CRÉATION D'UNE CARTE D'ESPACE LIBRE PROBABILISTE COMPRENANT DES OBJETS STATIQUES ET DYNAMIQUES

(30) Priorität: 09.01.2020 DE 102020200183
(43) Veröffentlichungstag der Anmeldung: 14.07.2021
(73) Patentinhaber: AUMOVIO Autonomous Mobility Germany GmbH, 85057 Ingolstadt (DE)
(72) Erfinder: Edling, Frank, 90411 Nürnberg (DE); Lux, Markus, 90411 Nürnberg (DE); Stübing, Hagen, 90411 Nürnberg (DE); Jürgens, Gunnar, 90411 Nürnberg (DE)
(74) Vertreter: Aumovio Corporation

(56) Entgegenhaltungen:
- WO-A1-2018/078413
- WO-A1-2019/136479
- US-A1- 2019 234 751

## Beschreibung

Die Erfindung betrifft ein Verfahren zum Erstellen einer probabilistischen Freiraumkarte mit statischen und dynamischen Objekten verbunden mit der wahrscheinlichkeitsbasierten Reaktion der Fahrfunktion.

Aus dem Stand der Technik sind beispielsweise sogenannte Stauassistenzsysteme bekannt, welche auf einer Kombination aus einer adaptiven Geschwindigkeitsregelung (adaptive cruise control, ACC) und einem Spurhalteassistenzsystem beruhen.

Weiterhin werden derzeit auch sogenannte Spurwechselassistenzsysteme eingeführt, welche allerdings durch den Fahrer aktiv ausgelöst bzw. initiiert werden müssen. Eine Reaktion auf den Verkehr und Linieninformationen (Objekte) wird entweder durch eine Messung der relativen Entfernung zu den Objekten und einer Steuerung des Abstandes (z.B. durch ACC, Spurhalteassistent) oder durch die Erstellung einer Gridkarte mit Informationen über die Wahrscheinlichkeit einer Belegung einer Gridzelle (z.B. Dampster-Shafer Gridkarte für das automatisierte Parken) realisiert. US 2019/234751 A1 und WO 2018/078413 A1 zeigen probabilistische Fahrzeugregelung.

Die derzeitigen Lösungen (Belegungsgitterkarten oder eine Liste von Objekten relativ zu dem Ego-Fahrzeug) stellen lediglich die Information des derzeitigen Zustands des Freiraums zur Verfügung. Ein bestimmter Bereich (z.B. Gridzelle) kann als "gemessen als frei"/ "gemessen als belegt" oder "noch nicht gemessen" markiert werden. Die aktuellen Karten enthalten jedoch keine Information über einen prädizierten Freiraum/belegten Raum in der Zukunft in Abhängigkeit von dem Verhalten anderer Verkehrsteilnehmer. Wenn eine Fahrstrategie geplant wird, muss man wissen, ob es klug ist in der Zukunft sich in einen bestimmten Bereich zu bewegen, wenn man als Ziel ein sicheres, komfortables und effektives Fahren realisieren möchte.

Es ist daher Aufgabe der vorliegenden Erfindung ein Verfahren bereitzustellen, welches eine verbesserte Freiraumkarte bereitstellt und die Nachteile des Standes der Technik überwindet.

Diese Aufgabe wird durch den Gegenstand des unabhängigen Anspruchs 1 gelöst. Weiter vorteilhafte Ausgestaltungen sind Gegenstand der Unteransprüche.

Grundsätzlich zielt die Erfindung darauf ab, wie mit Ungewissheiten in der Umfelderfassung und der Verkehrsteilnehmerprädiktion umgegangen wird. Beim autonomen Fahren werden bei der Umfelderfassung immer ungewisse Bereiche im Umfeldmodell verbleiben. Das Problem für nachgeschaltete Fahrfunktionen ist, dass ein Fahrer keine Noteingriffe anstelle von sanften frühzeitigen Reaktionen akzeptiert z.B. das Verhalten eines Systems mit schlechter Prädiktion: Ein beispielhaftes Szenario wäre, wenn plötzlich ein einscherender Verkehrsteilnehmer erkannt wird, was zum Auslösen einer Notbremsung führt. Ein Fahrer würde hier eher erwarten, dass das System ein sanftes Verlangsamen oder aber einen frühzeitigen Spurwechsel durchführt, da ein Fahrer beispielsweise das Einscheren schon mehrere Sekunden vorher erwartet hätte.

Ziel der Erfindung ist, frühzeitig und komfortabel auf "unsichere Bereiche" zu reagieren, als erst einige Sekunden später, wenn nur noch ein Noteingriff möglich ist. Ein Fahrer akzeptiert eher komfortable Reaktionen, die sich später als unnötig herausstellen (z.B. leichtes Verzögern ohne Betriebsbremse, um ein Einscheren zu ermöglichen, ohne dass das Einscheren dann auch stattfindet) als spätes Notbremsen auf ein schlecht prädiziertes Einscheren.

Allerdings dürfen Objekte mit einer niedrigen Existenzwahrscheinlichkeit nicht einfach ignoriert werden, da in seltenen aber sicherheitskritischen Fällen eine Notreaktion gerechtfertigt ist.

Die Erfindung basiert auf der Grundüberlegung, dass diese vorgenannten Probleme durch das Erstellen einer probabilistischen Freiraumkarte vermieden werden können, welche auch Informationen über prädiziertes Verhalten und Unsicherheit in der Prädiktion beinhaltet.

Erfindungsgemäß wird deshalb ein Verfahren gemäß Anspruch vorgeschlagen.

Das hier verwendete Umfeldmodell wird beispielsweise mittels Sensordatenfusion aus aktuellen Sensordaten von zumindest zwei Umfelderfassungssensoren, wie beispielsweise Radar- und Kamerasensor generiert. Im Hinblick auf die statischen Objekte kann es sich allerdings auch um ein abgespeichertes Umfeldmodell, z.B. eine semantische Gridkarte, handeln, wobei die entsprechenden Daten basierend auf einer Eigenlokalisierung des Ego-Fahrzeugs mittels GPS und/oder Landmarkenerkennung abgerufen werden. Falls ein abgespeichertes Umfeldmodell verwendet wird, ist es vorteilhaft dieses in regelmäßigen vorgegebenen Zyklen zu aktualisieren, um etwaige Veränderungen der statischen Objekte zuverlässig berücksichtigen zu können.

Das Wahrnehmungsbereichspolygon beschreibt erfindungsgemäß einen Polygonzug um das Ego-Fahrzeug und stellt das aktuelle 360° Field-of-view dar. Die Einflussgrößen für dieses Polygon sind zum einen die Sensorreichweiten und zum anderen auch die Geometrie der Fahrbahn (Kurven, Kuppen etc.).

Werden in dem Umfeld des Ego-Fahrzeugs dynamische Objekte bzw. andere Verkehrsteilnehmer detektiert, wird für jedes der dynamischen Objekte eine oder mehrere Trajektorien prädiziert. Die Prädiktion der jeweiligen Trajektorien wird beispielsweise basierend auf der Bewegungsrichtung, Geschwindigkeit und/oder Beschleunigung durchgeführt.

Diese vorgenannten Daten werden daraufhin in eine gemeinsame Karte eingetragen, welche als Grundlage für die weiteren Verfahrensschritte dient.

Weiterhin wird eine maximale Prädiktionszeit festgelegt, bis zu welcher maximal die möglichen Trajektorien der dynamischen Objekte bzw. der anderen Verkehrsteilnehmer prädiziert werden. Zudem werden Prädiktionszeitschritte festgelegt. Dies ist vorteilhaft, da dadurch festgelegt wird in welchen Abständen die Prädiktion aktualisiert wird. So kann beispielsweise die maximale Prädiktionszeit 10 Sekunden betragen und jeder Prädiktionsschritt beispielsweise alle 0,5 Sekunden durchgeführt werden.

Zum Starten der Prädiktion wird zunächst eine aktuelle Prädiktionszeit festgelegt und auf den Wert 0 gesetzt. Ab diesem Zeitpunkt werden mehrere Prädiktionen in den voreingestellten Prädiktionszeitschritten so lange durchgeführt, bis die maximale Prädiktionszeit erreicht ist. Hierbei wird für jeden Prädiktionszeitschritt eine probabilistische Freiraumkarte erstellt beginnend bei der aktuellen Prädiktionszeit. Jeder Prädiktionszeitschritt wird zu der aktuellen Prädiktionszeit addiert, bis die maximale Prädiktionszeit erreicht ist. Zu der aktuellen Prädiktionszeit werden außerdem Konfidenzbereiche um die statischen und dynamischen Objekte festgelegt. Die Konfidenzbereiche beschreiben dabei Bereiche, welche mit einer gewissen Wahrscheinlichkeit pro Gridzelle als belegt durch das jeweilige Objekt angesehen werden können. Zusätzlich wird zumindest ein unsicherer Bereich um zumindest ein dynamisches Objekt festgelegt. Es ist allerdings denkbar für mehrere dynamische Objekte je zumindest einen unsicheren Bereich festzulegen.

Dieser unsichere Bereich beschreibt dabei einen Bereich, welcher potentiell durch das dynamische Objekt in Zukunft durch eine Bewegung in diesen Bereich belegt werden könnte. Weiterhin werden die probabilistischen Freiraumkarten ausgewertet. Dies ist vorteilhaft, um ggf. nachgeschaltete Fahrfunktionen entsprechend anpassen zu können.

Für die Durchführung der Prädiktionen kann beispielsweise ein Bayes'sches Netz verwendet werden. Als Eingangsgrößen für die Berechnung der Wahrscheinlichkeit einer bestimmten Trajektorie eines dynamischen Objekts bzw. eines Verkehrsteilnehmers würden beispielsweise das Vorhandensein statischer und dynamischer Objekte im Umfeld, Geschwindigkeit, Beschleunigung, Bewegungsrichtung des entsprechenden Verkehrsteilnehmers sowie Straßenverlauf berücksichtigt werden. Weiterhin wäre die Berücksichtigung von Umweltfaktoren wie Wetter denkbar.

In einer besonders bevorzugten Ausführungsform wird für jeden Prädiktionszeitschritt eine Freiraumkarte erzeugt, bis die maximale Prädiktionszeit erreicht wird. Dies ist vorteilhaft, da sich von Prädiktionszeitschritt zu Prädiktionszeitschritt das Umfeld verändern kann. Auf diese Weise wird sichergestellt alle potentiellen Änderungen zu erfassen.

In einer besonders bevorzugten Ausführungsform wird der zumindest eine unsichere Bereich basierend auf dem vorhandenen Umfeldmodell und der Trajektorienprädiktion der dynamischen Objekte festgelegt.

In einer weiteren bevorzugten Ausgestaltung wird der zumindest eine unsichere Bereich entlang zumindest einer prädizierten Trajektorie eines dynamischen Objekts erweitert. Besonders bevorzugt wird der unsichere Bereich derart erweitert, dass bei der maximalen Prädiktionszeit alle möglichen prädizierten Trajektorien durch den unsicheren Bereich zumindest teilweise abgedeckt sind. Dies ist vorteilhaft, da Prädiktionen immer eine gewisse Unsicherheit aufweisen, welche durch den unsicheren Bereich berücksichtigt werden kann.

Besonders bevorzugt wird der unsichere Bereich in jedem Zeitschritt angepasst. Mit zunehmender Prädiktionszeit wird der unsichere Bereich größer, da die Unsicherheit entlang der prädizierten Trajektorie zunimmt. Beispielsweise wird die Unsicherheit größer, wenn ein Fahrzeug sich einem vorausfahrenden Fahrzeug nähert, da mit zunehmender Zeit und abnehmendem Abstand die Wahrscheinlichkeit für einen Spurwechsel steigt. Allerdings könnte das Fahrzeug auch bremsen, was zu einer Unsicherheit in der Prädiktion führt.

Weiter ist bevorzugt, dass nach der Auswertung der probabilistischen Freiraumkarten für den gesamten Zeithorizont eine Trajektorie eines Ego-Fahrzeugs geplant wird, welche für Komfort, Leistung und Sicherheit optimiert ist. So kann vorteilhafterweise bei einer hohen Unsicherheit vorausschauend ein Spurwechsel des Ego-Fahrzeugs durchgeführt werden, um einen abrupten Brems- oder Lenkeingriff zu einem späteren Zeitpunkt zu verhindern. Hierfür kann beispielsweise ein Schwellenwert für die Unsicherheit festgelegt werden. Wird dieser Schwellenwert überschritten wird das präventive Fahrmanöver durchgeführt. Alternativ kann man die Wahrscheinlichkeit der Belegung eines unsicheren Bereiches direkt in einer Kostenfunktion der Optimierung verwenden. Anstelle des Spurwechsels wäre auch ein Verlangsamen des Ego-Fahrzeugs als präventive Maßnahme denkbar.

Besonders bevorzugt ist die zumindest eine Fahrfunktion und/oder die Trajektorie des Ego-Fahrzeugs durch eine Kostenfunktion optimiert. Mit Hilfe einer Kostenfunktion wird eine Trajektorie des Ego-Fahrzeugs beispielsweise hinsichtlich des Erreichens einer Zielgeschwindigkeit, einer Längsbeschleunigung und Längsruck, einer Querbeschleunigung und Querruck, Sicherheitsabständen zu anderen Verkehrsteilnehmern, notwendige Reaktionen anderer Verkehrsteilnehmer (z.B. starkes Bremsen) sowie hinsichtlich der Wahrscheinlichkeit des Durchfahrens von belegten Bereichen anderer Verkehrsteilnehmer in der Zukunft bzw. Wahrscheinlichkeit späterer unkomfortabler Eingriffe optimiert. Denkbar wäre auch alternativ oder kumulativ die Optimierung hinsichtlich der Genauigkeit der Spurführung sowie der Abweichung des Kurswinkels des Fahrzeugs vom Kurswinkel der Spurmitte.

In einer weiteren besonders bevorzugten Ausführungsform wird für die Optimierung der Trajektorie auch das Wahrnehmungsbereichspolygon mit einbezogen. Beispielsweise ist es vorteilhaft in einer Linkskurve auf einer Autobahn nicht bis an den linken Fahrbahnrand zu fahren, den die Sensorik nicht mit genügend Vorausschau einsehen kann. Würden plötzlich am Fahrbahnrand z.B. verlorene Reifenteile auftauchen, wäre eine Kollision nur noch durch ein Notmanöver zu vermeiden. Anders stellt sich die Auswertung bei Verdeckung durch dynamische Objekte dar: bei Folgefahrt hinter einem Fahrzeug ist möglicherweise der Bereich vor dem Fahrzeug verdeckt, es kann jedoch angenommen werden, dass noch für einige Sekunden befahrbarer Freiraum vorliegt, da sich gerade ein anderes Objekt auf dieser Bahnkurve bewegt.

Es ist denkbar, dass Richtung, Beschleunigung und Geschwindigkeit der prädizierten Trajektorien in Weltkoordinaten ausgegeben werden. Es wäre auch denkbar, die Koordinaten in ein allgemeines Koordinatensystem zu transformieren. So könnten vorzugsweise die Koordinaten in Straßenkoordinaten ausgegeben werden.

Besonders bevorzugt werden die Konfidenzbereiche basierend auf einer Existenzwahrscheinlichkeit, Varianzen von Position und Geschwindigkeitsvektoren der Objekte sowie den Werten der Geschwindigkeits- und Beschleunigungsvektoren festgelegt. Hierdurch können nicht nur Konfidenzbereiche für statische Objekte sondern auch für dynamische Objekte festgelegt werden, da unter anderem auch die Geschwindigkeiten und Beschleunigungen berücksichtigt werden.

In einer weiteren bevorzugten Ausführungsform werden die unsicheren Bereiche basierend auf den Wahrscheinlichkeiten von Trajektorien, den Werten und Varianzen von Positionen, Geschwindigkeiten und Beschleunigungen der einzelnen prädizierten Trajektorienpunkte der Objekte (V1-V7) festgelegt.

Weiter werden bevorzugt vor dem Auswerten der Freiraumkarten in den Freiraumkarten Gridzellen mit gleicher Belegungswahrscheinlichkeit zu Bereichen zusammengefasst, welche jeweils mittels eines entsprechenden Polygonzugs voneinander abgegrenzt werden. Die Belegungswahrscheinlichkeit ist hierbei nicht notwendigerweise ein fester Wert sondern es ist vielmehr ein Bereich an Wahrscheinlichkeiten zu verstehen. So kann ein Bereich beispielsweise alle Gridzellen umfassen, welche eine Belegungswahrscheinlichkeit von mehr als 90% aufweisen. Auf diese Weise können beispielsweise auch die Konfidenzbereiche um die Verkehrsteilnehmer berücksichtigt werden. Ein Zusammenfassen der Gridzellen ist vorteilhaft, da durch das Zusammenfassen in Bereichen weniger Rechenleistung für die Auswertung benötigt wird.

Weitere Ausgestaltungen und Ausführungsformen ergeben sich aus den Zeichnungen. Darin zeigen:
Fig. 1 eine schematische Darstellung einer Freiraumkarte gemäß einer Ausführungsform der Erfindung;
Fig. 2 eine schematische Darstellung einer erweiterten Freiraumkarte nach einer Ausführungsform der Erfindung;
Fig. 3 eine weitere schematische Darstellung einer erweiterten Freiraumkarte nach einer Ausführungsform der Erfindung;
Fig. 4 eine weitere schematische Darstellung einer erweiterten Freiraumkarte nach einer Ausführungsform der Erfindung;
Fig. 5 eine weitere schematische Darstellung einer erweiterten Freiraumkarten nach einer weiteren Ausführungsform der Erfindung;
Fig. 6 ein schematisches Ablaufdiagramm einer Ausführungsform der Erfindung.

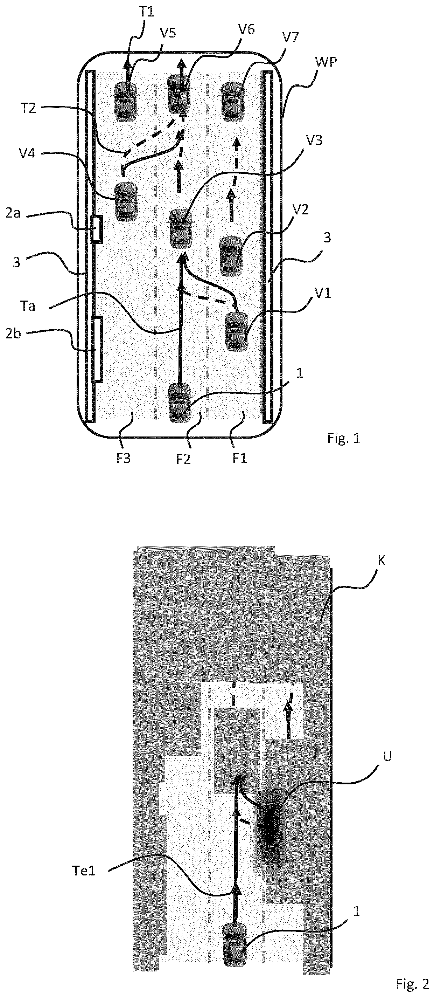

Figur 1 zeigt eine schematische Darstellung einer Freiraumkarte gemäß einer Ausführungsform der Erfindung. In dieser Darstellung bewegt sich ein Ego-Fahrzeug 1 zusammen mit mehreren Verkehrsteilnehmern V1 - V7 auf einer Straße mit 3 Fahrspuren F1 - F3. Das Ego-Fahrzeug 1 bewegt sich zu diesem Zeitpunkt entlang einer aktuellen Trajektorie Ta. Neben den Verkehrsteilnehmern V1-V7 ist weiterhin jeweils eine Fahrbahnbegrenzung 3, wie beispielsweise eine Leitplanke, sowie weitere statische Objekte 2a, 2b gezeigt. Für jeden Verkehrsteilnehmer V1-V7 werden zumindest zwei Trajektorien T1, T2 prädiziert. T1 beschreibt dabei die Trajektorie mit der höchsten Wahrscheinlichkeit. Die Trajektorie T2 beschriebt eine weitere mögliche Trajektorie mit geringerer Wahrscheinlichkeit. T1 ist dabei durch einen durchgezogenen Pfeil dargestellt, die Trajektorie T2 mit einem gestrichelten Pfeil. Aus Gründen der Übersichtlichkeit wurde jeweils nur eine Trajektorie T1, T2 gekennzeichnet und nicht alle Trajektorien T1, T2 von allen Verkehrsteilnehmern V1-V7. Zudem ist ein Wahrnehmungsbereichspolygon WP gezeigt. Dieses Wahrnehmungsbereichspolygon WP beschreibt im Sinne der Erfindung eine 360° Sicht um das Ego-Fahrzeug **1.** Die statischen Objekte 2a, 2b, 3 sowie das Wahrnehmungsbereichspolygon WP können dabei beispielsweise aus einem Umfeldmodell abgerufen werden.

In Figur 2 ist eine schematische Darstellung einer erweiterten Freiraumkarte nach einer Ausführungsform der Erfindung gezeigt. In der hier gezeigten Darstellung wurden Konfidenzbereiche K um die statischen 2a, 2b, 3 und dynamischen Objekte bzw. Verkehrsteilnehmer V1-V7 festgelegt. In dieser schematischen Darstellung wird für jedes statische Objekt 2a, 2b, 3 sowie jeden Verkehrsteilnehmer V1-V7 ein rechteckiger Konfidenzbereich K angenommen, so dass sich in dieser Darstellung mehrere Konfidenzbereiche überschneiden. Diese Konfidenzbereiche werden als belegt in der Freiraumkarte angesehen. Weiterhin wird hier ein unsicherer Bereich U entlang der möglichen Trajektorien T1, T2 des Verkehrsteilnehmers V1 festgelegt. Dieser unsichere Bereich U kann je nach Verhalten des Verkehrsteilnehmers V1 belegt werden oder frei bleiben. Es wäre in diesem Zusammenhang denkbar, dass alternativ oder zusätzlich zumindest ein weiterer unsicherer Bereich U für einen der anderen Verkehrsteilnehmer V2-V7 festgelegt wird. In der Figur 2 ist ein Zeitpunkt gezeigt, welcher beispielsweise einem ersten Prädiktionszeitschritt entspricht. Der unsichere Bereich U erstreckt sich dabei nur geringfügig auf die Fahrspur F2 des Ego-Fahrzeugs 1. Daher entspricht eine mögliche zukünftige Trajektorie Te1 des Ego-Fahrzeugs 1 weiterhin der aktuell gefahrenen Trajektorie Ta, da noch keine ausreichende Notwendigkeit für ein Fahrmanöver vorliegt.

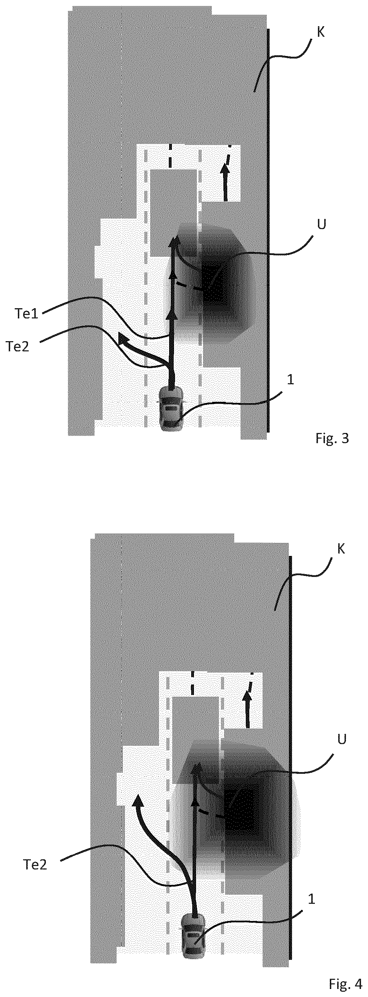

Figur 3 zeigt eine weitere schematische Darstellung einer erweiterten Freiraumkarte nach einer Ausführungsform der Erfindung. Figur 3 entspricht inhaltlich der Figur **2****.** Die Darstellung bezieht sich allerdings auf einen späteren Prädiktionszeitschritt, weswegen der unsichere Bereich U größer ist als in Figur **2****.** Dies liegt daran, da mit zunehmender Zeit V1 z.B. näher an V2 heran fährt und ein Spurwechsel wahrscheinlicher wird, aber nicht zu 100% angenommen werden kann, da V1 auch bremsen könnte. Daher wird der unsichere Bereich U vergrößert. Gleichzeitig wird von dem Ego-Fahrzeug 1 eine weitere mögliche Trajektorie Te2, zusätzlich zu der vorherigen Trajektorie Te1 entlang der aktuell gefahrenen Richtung, geplant. Diese weitere Trajektorie Te2 entspräche einem Spurwechsel auf Fahrspur F3.

Figur 4 zeigt eine weitere schematische Darstellung einer erweiterten Freiraumkarte nach einer Ausführungsform der Erfindung. Auch hier entspricht die Darstellung der aus den Figuren 2 und 3. Figur 4 beschreibt einen späteren Prädiktionszeitschritt als Figur 3. Folglich ist der unsichere Bereich U im Vergleich zu den Figuren 2 und 3 erneut vergrößert und erstreckt sich bereits über die gesamte Fahrspurbreite der Fahrspur F2 des Ego-Fahrzeugs 1. Die hier geplante potentielle Trajektorie Te2 des Ego-Fahrzeugs 1 sieht einen Fahrspurwechsel vor, um bereits vor dem potentiellen Spurwechsel von V1 auszuweichen. Somit wird ein sanftes Fahrmanöver rechtzeitig durchgeführt und es kommt nicht zu einem für den Fahrer des Ego-Fahrzeugs 1 unangenehmen Lenk- oder Bremseingriff.

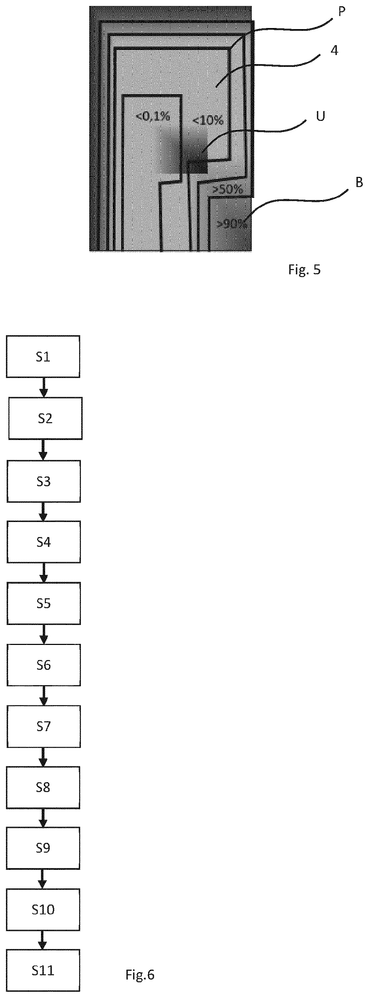

Figur 5 zeigt eine weitere schematische Darstellung einer erweiterten Freiraumkarten nach einer weiteren Ausführungsform der Erfindung. In dieser Darstellung wurden Gridzellen mit gleicher Belegungswahrscheinlichkeit B zu entsprechenden Bereichen 4 zusammengefasst. Diese Bereiche 4 werden jeweils von einem Polygonzug P abgegrenzt. Wie in der Figur gezeigt gibt es einen Bereich 4, in welchem die Belegungswahrscheinlichkeit B kleiner als 0,1% beträgt, einen Bereich 4 mit weniger als 10% Belegungswahrscheinlichkeit B, einen Bereich mit mehr als 50% sowie einen Bereich 4 mit mehr als 90 % Belegungswahrscheinlichkeit B. Der Bereich 4 mit 90% Belegungswahrscheinlichkeit kann beispielsweise aus den Gridzellen bestehen, in welchen ein Verkehrsteilnehmer detektiert wurde sowie dem Konfidenzbereich K um den Verkehrsteilnehmer herum. Weiterhin ist ein unsicherer Bereich U gezeigt, welcher mehrere dieser Bereiche 4 überschneiden kann.

Figur 6 zeigt ein schematisches Ablaufdiagramm einer Ausführungsform der Erfindung. In Schritt S1 werden statische Objekte 2a, 2b, 3 sowie ein Wahrnehmungsbereichspolygon WP aus einem vorhandenen Umfeldmodell abgerufen. In Schritt S2 werden prädizierte Trajektorien T1, T2 von dynamischen Objekten V1-V7 gesammelt. In einem darauf folgenden Schritt S3 werden die statischen Objekte 2a, 2b, 3, das Wahrnehmungsbereichspolygon WP und die prädizierten Trajektorien T1, T2 in einer ersten Freiraumkarte zusammengefügt. In Schritt S4 wird eine maximale Prädiktionszeit festgelegt und in Schritt S5, welcher auch parallel zu S4 ablaufen kann, werden entsprechende Prädiktionszeitschritte festgelegt. Hiernach wird in Schritt S6 eine aktuelle Prädiktionszeit festgelegt und der Wert der aktuellen Prädiktionszeit auf 0 gesetzt, um den Start eines festgelegten Prädiktionszeitraums festzulegen. In Schritt S7 werden Konfidenzbereiche K um die statischen 2a, 2b, 3 und dynamischen Objekte V1-V7 festgelegt. Weiterhin wird in Schritt S8 zumindest ein unsicherer Bereich U um zumindest ein statisches 2a, 2b, 3 oder dynamisches Objekt V1-V7 festgelegt. In Schritt S9 wird eine erste probabilistische Freiraumkarte für die aktuelle Prädiktionszeit erzeugt. In Schritt S10 wird zumindest eine weitere Freiraumkarte für einen Prädiktionszeitschritt erstellt. Dieser Schritt S10 wird so lange wiederholt, bis die maximale Prädiktionszeit erreicht ist. In einem weiteren Schritt S11 werden die erzeugten Freiraumkarten, insbesondere die Freiraumkarte zum Zeitpunkt der maximalen Prädiktionszeit ausgewertet.

### Bezugszeichenliste

1 Ego-Fahrzeug
2a,2b statisches Objekt
3 Fahrbahnbegrenzung
4 Bereich
B Belegungswahrscheinlichkeit
F1-F3 Fahrspuren
K Konfidenzbereich
P Polygonzug
S1-S11 Verfahrensschritte
Ta aktuelle Trajektorie Ego-Fahrzeug
Te1,Te2 potentielle alternative Trajektorie Ego-Fahrzeug
T1,T2 potentielle Trajektorien dynamischer Objekte
U unsicherer Bereich
V1-V7 dynamische Objekte/Verkehrsteilnehmer
WP Wahrnehmungsbereichspolygon

## Patentansprüche

1. Verfahren zum Erstellen einer probabilistischen Freiraumkarte, wobei die Freiraumkarte aus einer Vielzahl an Gridzellen mit Belegungswahrscheinlichkeiten besteht, mit statischen (2a, 2b, 3) und dynamischen Objekten (V1-V7) mit den folgenden Schritten:
- Abrufen (S1) statischer Objekte (2a, 2b, 3) sowie eines Wahrnehmungsbereichspolygons (WP) aus einem vorhandenen Umfeldmodell, wobei das Wahrnehmungsbereichspolygon (WP) ein Polygonzug um ein Ego-Fahrzeug beschreibt und das aktuelle 360° Field-of-View darstellt, und wobei Einflussgrößen für das Wahrnehmungsbereichspolygon Sensorreichweiten und die Geometrie einer Fahrbahn sind;
- Sammeln (S2) von prädizierten Trajektorien (T1, T2) von dynamischen Objekten (V1-V7);
- Zusammenfügen (S3) der statischen Objekte (2a, 2b, 3), des Wahrnehmungsbereichspolygons (WP) und der prädizierten Trajektorien (T1, T2) in einer ersten Freiraumkarte;
- Festlegen (S4) einer maximalen Prädiktionszeit;
- Festlegen (S5) von Prädiktionszeitschritten;
- Festlegen (S6) einer aktuellen Prädiktionszeit und setzen dieser aktuellen Prädiktionszeit auf den Wert 0 zum Festlegen des Starts eines festgelegten Prädiktionszeitraums;
- Festlegen (S7) von Konfidenzbereichen (K) um die statischen (2a, 2b, 3) und dynamischen Objekte (V1-V7), wobei die Konfidenzbereiche (K) Bereiche beschreiben, welche mit einer gewissen Wahrscheinlichkeit pro Gridzelle als belegt durch das jeweilige Objekt (2a, 2b, 3, V1-V7) angesehen werden können;
- Festlegen (S8) zumindest eines unsicheren Bereichs (U) um zumindest ein statisches (2a, 2b, 3) oder dynamisches Objekt (V1-V7);
- Erzeugen (S9) einer ersten probabilistischen Freiraumkarte für die aktuelle Prädiktionszeit;
- Erzeugen (S10) zumindest einer weiteren Freiraumkarte für zumindest einen Prädiktionszeitschritt;
- Auswerten (S11) der erzeugten Freiraumkarten.

2. Verfahren nach Anspruch 1, **dadurch gekennzeichnet, dass** für jeden Prädiktionszeitschritt eine Freiraumkarte erzeugt wird, bis die maximale Prädiktionszeit erreicht wird.

3. Verfahren nach Anspruch 1, **dadurch gekennzeichnet, dass** der zumindest ein unsicherer Bereich (U) basierend auf dem vorhandenen Umfeldmodell und der Trajektorienprädiktion der dynamischen Objekte (V1-V7) festgelegt wird.

4. Verfahren nach Anspruch 1 - 3, **dadurch gekennzeichnet, dass** der zumindest eine unsicherer Bereich (U) entlang zumindest einer prädizierten Trajektorie (T1, T2) eines dynamischen Objekts (V1-V7) erweitert wird.

5. Verfahren nach einem der Ansprüche 1 - 4, **dadurch gekennzeichnet, dass** der unsichere Bereich (U) in jedem Zeitschritt angepasst wird.

6. Verfahren nach einem der vorhergehenden Ansprüche,
**dadurch gekennzeichnet, dass** nach der Auswertung der probabilistischen Freiraumkarte für den gesamten Zeithorizont zumindest eine Fahrfunktion angepasst und/oder eine Trajektorie (Te1, Te2) des Ego-Fahrzeugs (1) geplant wird, welche für Komfort, Leistung und Sicherheit optimiert ist.

7. Verfahren nach einem der Ansprüche 1 bis 6, **dadurch gekennzeichnet, dass** für die Planung einer Trajektorie (Te1, Te2) des Ego-Fahrzeugs (1) auch das Wahrnehmungsbereichspolygon (WP) berücksichtigt wird.

8. Verfahren nach Anspruch 6, **dadurch gekennzeichnet, dass** die zumindest eine Fahrfunktion und/oder die Trajektorie (Te1, Te2) des Ego-Fahrzeugs (1) durch eine Kostenfunktion optimiert ist.

9. Verfahren nach einem der vorhergehenden Ansprüche,
**dadurch gekennzeichnet, dass** die Konfidenzbereiche (K) basierend auf einer Existenzwahrscheinlichkeit, Varianzen von Position und Geschwindigkeitsvektoren der Objekte (2a, 2b, 3, V1-V7) sowie den Werten der Geschwindigkeits- und Beschleunigungsvektoren festgelegt werden.

10. Verfahren nach einem der vorhergehenden Ansprüche,
**dadurch gekennzeichnet, dass** die unsicheren Bereiche basierend auf den Wahrscheinlichkeiten von Trajektorien, den Werten und Varianzen von Positionen, Geschwindigkeiten und Beschleunigungen der einzelnen prädizierten Trajektorienpunkte der Objekte (V1-V7) festgelegt werden.

11. Verfahren nach Anspruch 1, **dadurch gekennzeichnet, dass** vor dem Auswerten der Freiraumkarten in den Freiraumkarten Gridzellen mit gleicher Belegungswahrscheinlichkeit zu Bereichen zusammengefasst werden, welche mittels eines Polygonzugs voneinander abgegrenzt werden.

## Claims

1. Method for creating a probabilistic free space map, wherein the free space map consists of a multiplicity of grid cells with occupancy probabilities, with static objects (2a, 2b, 3) and dynamic objects (V1-V7), having the following steps:
- retrieving (S1) static objects (2a, 2b, 3) and a perception area polygon (WP) from an existing environmental model, wherein the perception area polygon (WP) describes a polygon course around an ego vehicle and represents the current 360° field of view, and wherein influencing variables for the perception area polygon are sensor ranges and the geometry of a road;
- collecting (S2) predicted trajectories (T1, T2) of dynamic objects (V1-V7);
- merging (S3) the static objects (2a, 2b, 3), the perception area polygon (WP) and the predicted trajectories (T1, T2) in a first free space map;
- determining (S4) a maximum prediction time;
- determining (S5) prediction time steps;
- determining (S6) a current prediction time and setting this current prediction time to the value 0 for the purpose of determining the start of a determined prediction period;
- determining (S7) confidence areas (K) around the static objects (2a, 2b, 3) and dynamic objects (V1-V7), wherein the confidence areas (K) describe areas that can be considered to be occupied by the respective object (2a, 2b, 3, V1-V7) with a certain probability per grid cell;
- determining (S8) at least one uncertain area (U) around at least one static object (2a, 2b, 3) or dynamic object (V1-V7);
- generating (S9) a first probabilistic free space map for the current prediction time;
- generating (S10) at least one further free space map for at least one prediction time step;
- evaluating (S11) the free space maps generated.

2. Method according to Claim 1, **characterized in that** a free space map is generated for each prediction time step until the maximum prediction time is reached.

3. Method according to Claim 1, **characterized in that** the at least one uncertain area (U) is determined on the basis of the existing environmental model and the prediction of the trajectories of the dynamic objects (V1-V7).

4. Method according to Claims 1-3, **characterized in that** the at least one uncertain area (U) is extended along at least one predicted trajectory (T1, T2) of a dynamic object (V1-V7).

5. Method according to one of Claims 1-4, **characterized in that** the unsafe area (U) is adapted in each time step.

6. Method according to one of the preceding claims, **characterized in that**, after evaluating the probabilistic free space map for the entire time horizon, at least one driving function is adapted and/or a trajectory (Te1, Te2) of the ego vehicle (1) that is optimized for comfort, performance and safety is planned.

7. Method according to one of Claims 1 to 6, **characterized in that** the perception area polygon (WP) is also taken into account for planning a trajectory (Te1, Te2) of the ego vehicle (1).

8. Method according to Claim 6, **characterized in that** the at least one driving function and/or the trajectory (Te1, Te2) of the ego vehicle (1) is/are optimized by means of a cost function.

9. Method according to one of the preceding claims, **characterized in that** the confidence areas (K) are determined on the basis of an existence probability, variances of position and speed vectors of the objects (2a, 2b, 3, V1-V7) and the values of the speed and acceleration vectors.

10. Method according to one of the preceding claims, **characterized in that** the uncertain areas are determined on the basis of the probabilities of trajectories, the values and variances of positions, velocities and accelerations of the individual predicted trajectory points of the objects (V1-V7).

11. Method according to Claim 1, **characterized in that**, before evaluating the free space maps, grid cells with the same occupancy probability are combined in the free space maps to form areas which are delimited from each other by means of a polygon course.

## Revendications

1. Procédé de création d'une carte d'espace libre probabiliste, la carte d'espace libre étant constituée d'une pluralité de cellules de grille présentant certaines probabilités d'occupation, contenant des objets statiques (2a, 2b, 3) et dynamiques (V1-V7), comprenant les étapes suivantes :
- extraction (S1) d'objets statiques (2a, 2b, 3) ainsi que d'un polygone de zone de perception (WP) à partir d'un modèle d'environnement existant, le polygone de zone de perception (WP) décrivant une ligne polygonale entourant un véhicule ego et représentant le champ de vision actuel à 360°, et les grandeurs ayant une influence dans le polygone de zone de perception étant les portées des capteurs et la géométrie d'une chaussée ;
- collecte (S2) de trajectoires prédites (T1, T2) d'objets dynamiques (V1-V7) ;
- combinaison (S3) des objets statiques (2a, 2b, 3), du polygone de zone de perception (WP) et des trajectoires prédites (T1, T2) dans une première carte d'espace libre ;
- définition (S4) d'un temps de prédiction maximal ;
- définition (S5) d'incréments de temps de prédiction ;
- définition (S6) d'un temps de prédiction actuel et attribution de la valeur 0 à ce temps de prédiction actuel pour définir le début d'une période de prédiction définie ;
- définition (S7) de zones de confiance (K) entourant les objets statiques (2a, 2b, 3) et dynamiques (V1-V7), les zones de confiance (K) décrivant des zones qui peuvent être considérées avec une certaine probabilité par cellule de grille comme étant occupées par l'objet respectif (2a, 2b, 3, V1-V7) ;
- définition (S8) d'au moins une zone incertaine (U) entourant au moins un objet statique (2a, 2b, 3) ou dynamique (V1-V7) ;
- génération (S9) d'une première carte d'espace libre probabiliste pour le temps de prédiction actuel ;
- génération (S10) d'au moins une autre carte d'espace libre pour au moins un pas temporel de prédiction ;
- évaluation (S11) des cartes d'espace libre générées.

2. Procédé selon la revendication 1, **caractérisé en ce qu'**une carte d'espace libre est générée pour chaque pas temporel de prédiction jusqu'à ce que le temps de prédiction maximal soit atteint.

3. Procédé selon la revendication 1, **caractérisé en ce que** ladite au moins une zone incertaine (U) est définie sur la base du modèle d'environnement existant et de la prédiction de trajectoire des objets dynamiques (V1-V7).

4. Procédé selon l'une quelconque des revendications 1-3, **caractérisé en ce que** ladite au moins une zone incertaine (U) est élargie le long d'au moins une trajectoire prédite (T1, T2) d'un objet dynamique (V1-V7).

5. Procédé selon l'une quelconque des revendications 1-4, **caractérisé en ce que** la zone incertaine (U) est ajustée à chaque pas temporel.

6. Procédé selon l'une quelconque des revendications précédentes, **caractérisé en ce qu'**après l'évaluation de la carte d'espace libre probabiliste pour l'ensemble de l'horizon temporel, au moins une fonction de conduite est ajustée et/ou une trajectoire (Te1, Te2) du véhicule ego (1) est planifiée, laquelle est optimisée pour le confort, les performances et la sécurité.

7. Procédé selon l'une quelconque des revendications 1 à 6, **caractérisé en ce que** le polygone de zone de perception (WP) est également pris en compte pour la planification d'une trajectoire (Te1, Te2) du véhicule ego (1).

8. Procédé selon la revendication 6, **caractérisé en ce que** ladite au moins une fonction de conduite et/ou la trajectoire (Te1, Te2) du véhicule ego (1) est optimisée au moyen d'une fonction de coût.

9. Procédé selon l'une quelconque des revendications précédentes, **caractérisé en ce que** les zones de confiance (K) sont définies sur la base d'une probabilité d'existence, de variances de vecteurs de position et de vitesse des objets (2a, 2b, 3, V1-V7) ainsi que des valeurs des vecteurs de vitesse et d'accélération.

10. Procédé selon l'une quelconque des revendications précédentes, **caractérisé en ce que** les zones incertaines sont définies sur la base des probabilités de trajectoires, des valeurs et des variances de positions, de vitesses et d'accélérations des différents points de trajectoire prédits des objets (V1-V7).

11. Procédé selon la revendication 1, **caractérisé en ce qu'**avant l'évaluation des cartes d'espace libre, dans les cartes d'espace libre, des cellules de grille ayant la même probabilité d'occupation sont regroupées en zones qui sont délimitées les unes par rapport aux autres au moyen d'une ligne polygonale.
